(19) Europäisches Patentamt
European Patent Office
Office européen des brevets

(11) **EP 3 360 709 B1**

(12) **FASCICULE DE BREVET EUROPEEN**

(45) Date de publication et mention
de la délivrance du brevet:
**27.05.2020 Bulletin 2020/22**

(51) Int Cl.:
***B60K 6/36*** *(2007.10)*     ***H02P 9/06*** *(2006.01)*
***H02P 6/10*** *(2006.01)*

(21) Numéro de dépôt: **18154959.3**

(22) Date de dépôt: **02.02.2018**

(54) **CORRECTEUR D'ASSERVISSEMENT EN VITESSE D'UNE MACHINE ELECTRIQUE TOURNANTE**

KORREKTOR DER DREHZAHLREGELUNG EINER ELEKTRISCH UMLAUFENDEN MASCHINE

CORRECTOR OF A SPEED CONTROL SYSTEM OF A ROTARY ELECTRICAL MACHINE

(84) Etats contractants désignés:
**AL AT BE BG CH CY CZ DE DK EE ES FI GB GR
HR HU IE IS IT LI LT LU LV MC MK MT NL NO PL
PT RO RS SE SI SK SM TR**

(30) Priorité: **09.02.2017 FR 1751076**

(43) Date de publication de la demande:
**15.08.2018 Bulletin 2018/33**

(73) Titulaire: **VALEO EQUIPEMENTS ELECTRIQUES
MOTEUR
94046 Créteil Cedex (FR)**

(72) Inventeurs:
• **KONAN, Gilbert
94046 Créteil Cedex (FR)**
• **LAUPA, Joachim
94046 Créteil Cedex (FR)**

(56) Documents cités:
**EP-A1- 1 074 087**     **EP-A1- 2 505 410**
**CN-A- 106 274 443**     **GB-A- 2 276 019**
**US-A1- 2002 002 094**

• **Robert Erickson: "Transient Response of a
Second-Order System", , 27 février 2012
(2012-02-27), XP055410885, Extrait de l'Internet:
URL:http://ecee.colorado.edu/~ecen2270/mat
erials/TransResp2ndOrdSys.pdf [extrait le
2017-09-28]**

**Description**

La présente invention porte sur un correcteur d'asservissement en vitesse d'une machine électrique tournante. L'invention trouve une application particulièrement avantageuse, mais non exclusive, avec les machines électriques de forte puissance fonctionnant notamment sur le réseau électrique du véhicule automobile.

Dans certains types de chaînes de traction de véhicule automobile assurant la transmission de la puissance mécanique du moteur thermique vers les roues du véhicule, une machine électrique tournante réversible de forte puissance peut être accouplée à une boîte de vitesses du véhicule par exemple du type à double embrayages. comme dans les documents US2002/0002094A1 ou CN106274443

La machine électrique est apte à fonctionner dans un mode alternateur pour fournir notamment de l'énergie à la batterie et au réseau de bord du véhicule, et dans un mode moteur, non seulement pour assurer le démarrage du moteur thermique, mais également pour participer à la traction du véhicule seule ou en combinaison avec le moteur thermique.

Le pilotage en vitesse de la machine électrique est utilisé notamment pour effectuer des synchronisations entre les pignons des arbres de la boîte de vitesses au moment d'un changement de rapport. Pour cela, il faut entrainer la machine électrique à la même vitesse qu'un des arbres tout en évitant un dépassement de la consigne de vitesse qui évolue en temps réel.

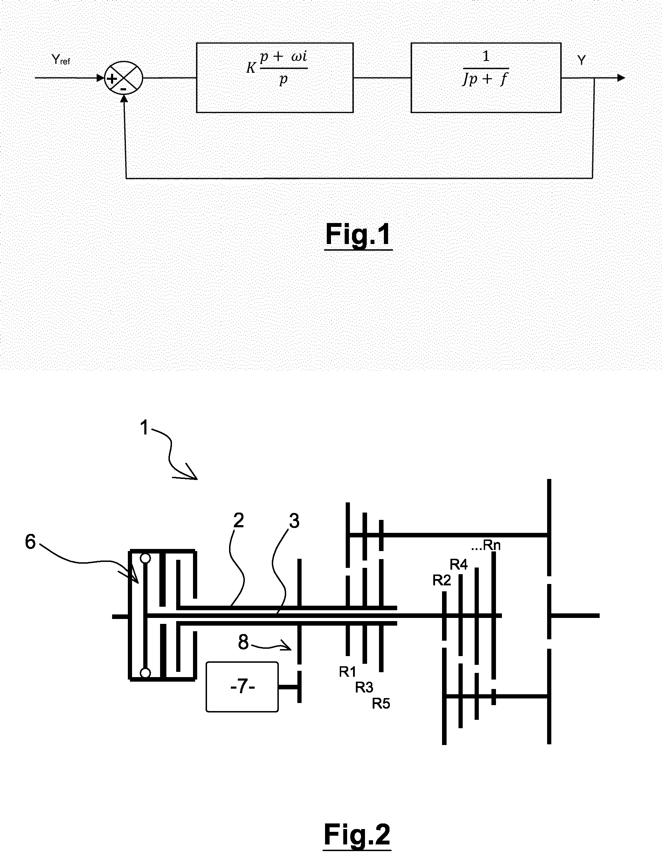

Comme cela est illustré par la figure 1, dans l'espace de Laplace, la fonction de transfert établissant la relation entre la vitesse et le couple de la machine électrique peut s'écrire sous la forme H(p)= 1/(J.p+f), J étant l'inertie et f étant le coefficient de frottements.

Un régulateur de type Proportionnel-Intégral (PI) est défini par K.[(p+wi)/p], K étant le gain et wi étant la pulsation propre du pôle.

La fonction de transfert de la boucle ouverte (FTBO) s'exprime donc de la manière suivante:

$$FTBO(p) = K \cdot \frac{p + \omega i}{p} \cdot \frac{1}{Jp + f} = K \cdot \frac{p + \omega i}{Jp^2 + fp}$$

La fonction de transfert de la boucle fermée (FTBF) Yref/Y s'exprime de la manière suivante:

$$FTBF(p) = \frac{FTBO(p)}{1 + FTBO(p)} = \frac{K.\dfrac{p + \omega i}{Jp^2 + fp}}{1 + K.\dfrac{p + \omega i}{Jp^2 + fp}} = \frac{1 + \dfrac{p}{\omega i}}{1 + \dfrac{(K + f)}{K\omega i}\, p + \dfrac{p^2}{\dfrac{K\omega i}{J}}}$$

$$FTBF(p) = \frac{1 + \dfrac{p}{\omega i}}{1 + \dfrac{(K + f)}{K\omega i}\, p + \dfrac{p^2}{\dfrac{K\omega i}{J}}}$$

Au regard de l'expression de la fonction de transfert en boucle fermée, il s'avère que le numérateur comporte un zéro, ce qui est équivalent à une action dérivée. La réponse indicielle est donc susceptible de présenter un dépassement par rapport à une valeur cible.

La présente invention vise à remédier efficacement à cet inconvénient en proposant une machine électrique telle que décrit dans la revendication 1.

L'invention permet ainsi, grâce à la configuration du régulateur, de limiter les dépassements de consigne tout en conservant une dynamique rapide pour atteindre la consigne de vitesse lors du pilotage.

Selon une réalisation, le régulateur de vitesse comporte:

- un premier comparateur apte à comparer une vitesse mesurée avec une valeur de consigne, un écart issu du premier comparateur étant appliqué en entrée de l'intégrateur, et
- un deuxième comparateur apte à comparer la vitesse mesurée avec une valeur en sortie de l'intégrateur, un écart issu du comparateur étant multiplié par le gain.

Selon une réalisation, l'intégrateur est un intégrateur pur.

Selon une réalisation, dans l'espace de Laplace, une fonction de transfert en boucle fermée du régulateur de vitesse associé à un processus dont une valeur de sortie correspond à la vitesse de la machine électrique à réguler est dépourvue de zéro au numérateur.

Selon une réalisation, la fonction de transfert en boucle fermée du régulateur de vitesse associé au processus dont la valeur de sortie correspond à la vitesse de la machine électrique à réguler correspond à un filtre du second ordre dont un amortissement vaut 1.

Selon une réalisation, la fonction de transfert en boucle fermée du régulateur de vitesse associé au processus dont la valeur de sortie correspond à la vitesse de la machine électrique à réguler présente la forme suivante:

$$FTBF(p) = \frac{1}{\dfrac{J}{K\omega i}\, p^2 + \dfrac{(f+K)}{K\omega i}\, p + 1}$$

- J étant l'inertie,
- f étant le coefficient de frottements,
- K étant la valeur du gain, et
- wi étant la pulsation propre d'un pôle.

Selon une réalisation, ladite machine électrique tournante est apte à être alimentée sous une tension de 48 Volts.

Selon une réalisation, la boîte de vitesses est du type à double embrayages.

L'invention sera mieux comprise à la lecture de la description qui suit et à l'examen des figures qui l'accompagnent. Ces figures ne sont données qu'à titre illustratif mais nullement limitatif de l'invention.

La figure 1 est une représentation schématique d'un contrôleur proportionnel et intégral selon l'état de la technique d'une machine électrique tournante.

La figure 2 est une représentation schématique d'un ensemble comportant une machine électrique tournante selon l'invention accouplée à une boîte de vitesse à double embrayages;

La figure 3 est une représentation schématique fonctionnelle de la machine électrique tournante selon la présente invention;

La figure 4 est une représentation schématique du contrôleur de la machine électrique tournante selon l'invention;

La figure 5 est une représentation graphique de la vitesse de rotation en fonction du temps illustrant la réponse indicielle obtenue respectivement pour un régulateur selon l'état de la technique et un régulateur selon la présente invention.

Comme cela est illustré par la figure 2, une boîte de vitesses 1 comporte une pluralité de rapports de vitesse R1-Rn. Un premier arbre 2 est associé à des rapports de vitesse impairs et un deuxième arbre 3 est associé à des rapports de vitesse pairs. Un système à double embrayages 6 permet de lier en rotation ou de libérer ces arbres 2, 3 en fonction du rapport engagé.

Une machine électrique tournante 7 est accouplée à la boîte de vitesses 1 via un réducteur de vitesse 8. La machine électrique 7 pourra être implantée à l'intérieur ou à l'extérieur de la boîte de vitesses 1.

La machine électrique 7 est apte à fonctionner dans un mode alternateur pour fournir notamment de l'énergie à la batterie et au réseau de bord 10 du véhicule, et dans un mode moteur, non seulement pour assurer le démarrage du moteur thermique, mais également pour participer à la traction du véhicule seule ou en combinaison avec le moteur thermique.

Le pilotage en vitesse de la machine électrique 7 est utilisé notamment pour effectuer des synchronisations entre les pignons des arbres 2, 3 de la boîte de vitesses 1 au moment d'un changement de rapports de vitesse R1-Rn.

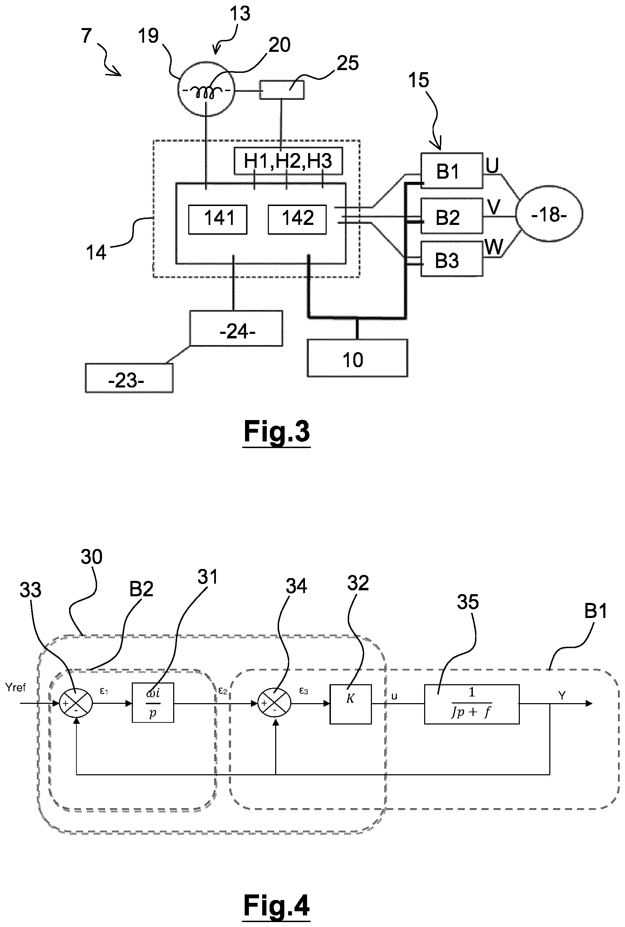

Plus précisément, comme cela est représenté sur la figure 3, la machine électrique 7 est connectée à l'un des réseaux de bord 10. Le réseau de bord 10 présente de préférence une tension de 48V. En variante, le réseau de bord 10 présente une tension de 12V ou 24V.

L'alterno-démarreur 7 comprend notamment une partie électromécanique 13, un module de contrôle 14, et un onduleur 15. La partie électromécanique 13 comprend un élément induit 18, et un élément inducteur 19. Dans un exemple, l'induit 18 est le stator, et l'inducteur 19 est un rotor comportant une bobine d'excitation 20. Le stator 18 comprend un nombre N quelconque de phases. Les phases du stator 18 pourront être couplées en triangle ou en étoile. Une combinaison de couplage triangle et étoile est également envisageable.

Le module de contrôle 14 comprend un circuit d'excitation 141 générant un courant d'excitation lex qui est injecté dans la bobine d'excitation 20.

Le module de contrôle 14 comprend en outre un circuit de contrôle 142, comprenant par exemple un microcontrôleur, qui pilote l'onduleur 15 en fonction d'un signal de commande issu du calculateur moteur 23 et reçu via un connecteur de signal 24. Le module de contrôle 14 comporte des fonctions du régulateur 30 décrit ci-après qui pourront être implémentées sous forme logicielle.

L'onduleur 15 comporte une pluralité de bras B1, B2, B3 ayant chacun deux organes de commutation, par exemple des transistors de type MOS, pour relier les phases u, v, w à un potentiel positif du réseau de bord 10 ou à la masse en fonction de la position angulaire du rotor 19.

La mesure de la position angulaire ainsi que la mesure de la vitesse angulaire du rotor 19 pourront être réalisées au moyen de capteurs analogiques à effet hall H1, H2, H3 et d'une cible magnétique 25 associée qui est solidaire en rotation du rotor 19.

Un régulateur de vitesse 30 montré sur la figure 4 est activé lors d'une phase de synchronisation entre des pignons de deux rapports de vitesse pendant laquelle la machine électrique 7 est pilotée en vitesse.

Ce régulateur 30 comporte un intégrateur 31 monté en cascade avec un gain 32. De préférence, l'intégrateur 31 est un intégrateur pur.

Plus précisément, le régulateur 30 comporte un premier comparateur 33 apte à comparer la vitesse mesurée Y avec une valeur de consigne Yref, un écart $\varepsilon 1$ issu du comparateur 33 étant appliqué en entrée de l'intégrateur 31. Un deuxième comparateur compare la vitesse mesurée Y avec la valeur $\varepsilon 2$ en sortie de l'intégrateur 31. L'écart $\varepsilon 3$ issu du comparateur 34 est appliqué en entrée du module de gain 32. La valeur u en sortie du module de gain 32 est appliquée en entrée d'un module 35 correspondant à la fonction de transfert du processus dont la valeur de sortie Y correspond à la vitesse de la machine électrique à réguler.

Dans le cadre de cette application, il est considéré que les constantes de temps électriques sont suffisamment rapides devant les constantes mécaniques.

La fonction de transfert globale du système correspond à la fonction transfert de la boucle B1 cascadée avec la boucle B2. La boucle B1 comporte le deuxième comparateur 34, le gain 32, et le module 35 de la fonction de transfert du processus à réguler. La boucle B2 comporte le premier comparateur 33 et l'intégrateur 31.

On calcule donc dans un premier temps la fonction de transfert en boucle fermée de la boucle B1 :

$$FTBF\,1(p) = \frac{\varepsilon_2}{Y} = \frac{K\dfrac{1}{Jp+f}}{1 + K\dfrac{1}{Jp+f}} = \frac{K}{Jp+f+K}$$

On en déduit ensuite la fonction de transfert de la boucle totale (FTBF) dans l'espace de Laplace:

$$FTBF(p) = \frac{Yref}{Y} = \frac{FTBF_1 \times \dfrac{\omega i}{p}}{1 + FTBF_1 \times \dfrac{\omega i}{p}} = \frac{\dfrac{K\omega i}{Jp^2+(f+K)p}}{1 + \dfrac{K\omega i}{Jp^2+(f+K)p}} = \frac{K\omega i}{Jp^2+(f+K)p+K\omega i}$$

$$FTBF(p) = \frac{1}{\dfrac{J}{K\omega i}p^2 + \dfrac{(f+K)}{K\omega i}p + 1}$$

- J étant l'inertie,
- f étant le coefficient de frottements,
- K étant la valeur de gain et
- wi étant la pulsation propre du pôle de l'intégrateur.

Le régulateur 30 est associé à une fonction de transfert en boucle fermée dépourvue de zéro au numérateur.

$$H_{2nd}(p) = \frac{1}{1 + \dfrac{2\xi}{\omega_0} p + \left(\dfrac{p}{\omega_0}\right)^2}$$

Le système peut ainsi s'apparenter à filtre du second ordre dont l'amortissement est égal à 1.

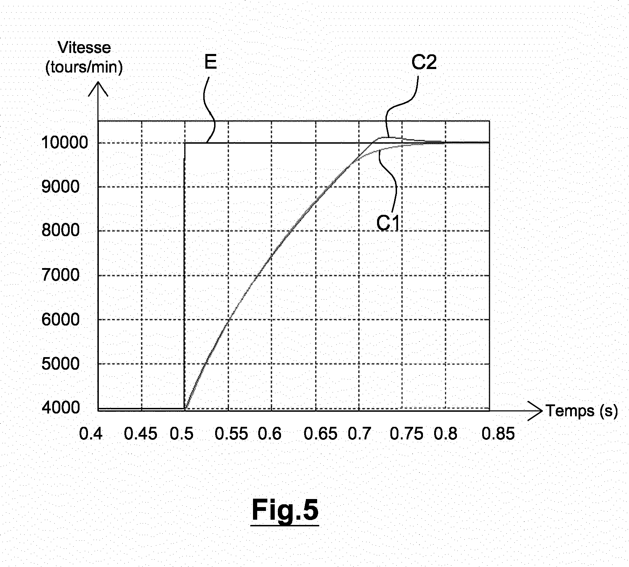

Comme cela représenté sur la figure 5, en réponse à l'application d'un échelon de vitesse E valant par exemple 10000 tours/min, le régulateur 30 selon l'invention correspondant à la courbe C1 permet d'éviter les dépassements qui sont observables avec un régulateur 30 selon l'état de la technique (cf. courbe C2).

En outre, on observe que le régulateur 30 selon l'invention permet de conserver une dynamique analogue à celle du régulateur 30 selon l'état de la technique.

Il est à noter que du fait du pilotage en vitesse de la machine électrique 7 pour assurer la synchronisation entre des pignons de deux rapports de vitesse lors d'un changement de rapport, la boîte de vitesses 1 est dépourvue de synchroniseurs sur une partie des rapports.

Bien entendu, la description qui précède a été donnée à titre d'exemple uniquement et ne limite pas le domaine de l'invention.

En outre, les différentes caractéristiques, variantes, et/ou formes de réalisation de la présente invention peuvent être associées les unes avec les autres selon diverses combinaisons, dans la mesure où elles ne sont pas incompatibles ou exclusives les unes des autres.

**Revendications**

1. Machine électrique tournante (7) accouplée avec une boîte de vitesses (1) de véhicule automobile comportant une pluralité de rapports de vitesse (R1-Rn), comportant

   - un régulateur de vitesse (30) apte à être activé lors d'une phase de synchronisation entre des pignons de deux rapports de vitesse (R1-Rn) pendant laquelle ladite machine électrique tournante (7) est pilotée en vitesse,
   - **caractérisée en ce que** ledit régulateur de vitesse (30) comporte un intégrateur (31) en cascade avec un gain (32),
   - ladite boîte de vitesses (1) est dépourvue de synchroniseurs sur une partie des rapports.

2. Machine selon la revendication 1, **caractérisé en ce que** le régulateur de vitesse (30) comporte:

   - un premier comparateur (33) apte à comparer une vitesse mesurée (Y) avec une valeur de consigne (Yref), un écart ($\varepsilon$1) issu du premier comparateur (33) étant appliqué en entrée de l'intégrateur (31), et
   - un deuxième comparateur (34) apte à comparer la vitesse mesurée (Y) avec une valeur ($\varepsilon$2) en sortie de l'intégrateur (31), un écart ($\varepsilon$3) issu du comparateur (34) étant multiplié par le gain (32).

3. Machine électrique tournante selon l'une quelconque des revendications 1 à 2, **caractérisée en ce que** dans l'espace de Laplace, une fonction de transfert en boucle fermée (FTBF) du régulateur de vitesse (30) associé à un processus dont une valeur de sortie correspond à la vitesse de la machine électrique à réguler est dépourvue de zéro au numérateur.

4. Machine électrique tournante selon la revendication 3, **caractérisée en ce que** la fonction de transfert en boucle fermée (FTBF) du régulateur de vitesse (30) associé au processus dont la valeur de sortie correspond à la vitesse de la machine électrique à réguler correspond à un filtre du second ordre dont un amortissement-vaut 1.

5. Machine électrique tournante selon la revendication 4, **caractérisée en ce que** la fonction de transfert en boucle fermée (FTBF) du régulateur de vitesse (30) associé au processus dont la valeur de sortie correspond à la vitesse de la machine électrique à réguler présente la forme suivante:

$$FTBF(p) = \frac{1}{\dfrac{J}{K\omega i} p^2 + \dfrac{(f+K)}{K\omega i} p + 1}$$

   - J étant l'inertie,

- f étant le coefficient de frottements,
- K étant la valeur du gain, et
- wi étant la pulsation propre d'un pôle.

**6.** Machine électrique tournante selon l'une quelconque des revendications 1 à 5, **caractérisé en ce qu'**elle est apte à être alimentée sous une tension de 48 Volts.


**Patentansprüche**

**1.** Elektrisch umlaufende Maschine (7), die mit einem Getriebe (1) eines Kraftfahrzeugs gekoppelt ist, das eine Vielzahl von Übersetzungsverhältnissen (R1-Rn) umfasst, umfassend:

- einen Drehzahlregler (30), der fähig ist, während einer Synchronisierungsphase zwischen Getrieberädern zweier Übersetzungsverhältnisse (R1-Rn), während der die elektrisch umlaufende Maschine (7) drehzahlgesteuert wird, aktiviert zu werden,
- **dadurch gekennzeichnet, dass** der Drehzahlregler (30) einen Integrierer (31) umfasst, der mit einer Verstärkung (32) in Kaskade geschaltet ist,
- wobei das Getriebe (1) über einen Teil der Verhältnisse über keine Synchronisiereinrichtungen verfügt.

**2.** Maschine nach Anspruch 1, **dadurch gekennzeichnet, dass** der Drehzahlregler (30) Folgendes umfasst:

- einen ersten Komparator (33), der fähig ist, eine gemessene Drehzahl (Y) mit einem Sollwert (Yref) zu vergleichen, wobei eine durch den ersten Komparator (33) ausgegebene Differenz ($\varepsilon$1) in den Eingang des Integrierers (31) eingegeben wird, und
- einen zweiten Komparator (34), der fähig ist, die gemessene Drehzahl (Y) mit einem Wert ($\varepsilon$2) am Ausgang des Integrierers (31) zu vergleichen, wobei eine durch den Komparator (34) ausgegebene Differenz ($\varepsilon$3) mit der Verstärkung (32) multipliziert wird.

**3.** Elektrisch umlaufende Maschine nach einem der Ansprüche 1 bis 2, **dadurch gekennzeichnet, dass** im Laplace-Bereich eine Übertragungsfunktion mit geschlossenem Regelkreis (FTBF, Fonction de Transfert en Boucle Fermee) des Drehzahlreglers (30), der mit einem Prozess assoziiert ist, bei dem ein Ausgangswert der Drehzahl der zu regelnden elektrischen Maschine entspricht, über keine Null im Nenner verfügt.

**4.** Elektrisch umlaufende Maschine nach Anspruch 3, **dadurch gekennzeichnet, dass** die Übertragungsfunktion mit geschlossenem Regelkreis (FTBF) des Drehzahlreglers (30), der mit dem Prozess assoziiert ist, dessen Ausgangswert der Drehzahl der zu regelnden elektrischen Maschine entspricht, einem Filter zweiter Ordnung entspricht, bei dem eine Dämpfung 1 beträgt.

**5.** Elektrisch umlaufende Maschine nach Anspruch 4, **dadurch gekennzeichnet, dass** die Übertragungsfunktion mit geschlossenem Regelkreis (FTBF) des Drehzahlreglers (30), der mit dem Prozess assoziiert ist, dessen Ausgangswert der Drehzahl der zu regelnden elektrischen Maschine entspricht, die folgende Form aufweist:

$$FTBF(p) = \frac{1}{\dfrac{J}{K\omega i}p^2 + \dfrac{(f+K)}{K\omega i}p + 1}$$

- wobei J die Trägheit ist,
- f der Reibungskoeffizient ist,
- K der Verstärkungswert ist und
- wi die Eigenschwingung eines Pols ist.

**6.** Elektrisch umlaufende Maschine nach einem der Ansprüche 1 bis 5, **dadurch gekennzeichnet, dass** sie fähig ist, mit einer Spannung von 48 Volt versorgt zu werden.

**Claims**

1. Rotating electric machine (7) coupled with a motor vehicle gearbox (1) comprising a plurality of gear ratios (R1-Rn), comprising

   - a speed regulator (30) that can be activated during a phase of synchronization between pinions of two gear ratios (R1-Rn) during which said rotating electric machine (7) is speed-controlled,
   - **characterized in that** said speed regulator (30) comprises an integrator (31) cascaded with a gain (32),
   - said gearbox (1) has no synchronizers over a part of the gear ratios.

2. Machine according to Claim 1, **characterized in that** the speed regulator (30) comprises:

   - a first comparator (33) capable of comparing a measured speed (Y) with a setpoint value (Yref), a deviation ($\varepsilon$1) deriving from the first comparator (33) being applied to the input of the integrator (31), and
   - a second comparator (34) capable of comparing the measured speed (Y) with a value ($\varepsilon$2) at the output of the integrator (31), a deviation ($\varepsilon$3) deriving from the comparator (34) being multiplied by the gain (32).

3. Rotating electric machine according to either one of Claims 1 and 2, **characterized in that**, in the Laplace space, a closed loop transfer function (FTBF) of the speed regulator (30) associated with a process whose output value corresponds to the speed of the electric machine to be regulated has no zero in the numerator.

4. Rotating electric machine according to Claim 3, **characterized in that** the closed loop transfer function (FTBF) of the speed regulator (30) associated with the process whose output value corresponds to the speed of the electric machine to be regulated corresponds to a second order filter with a damping of value 1.

5. Rotating electric machine according to Claim 4, **characterized in that** the closed loop transfer function (FTBF) of the speed regulator (30) associated with the process whose output value corresponds to the speed of the electric machine to be regulated takes the following form:

$$FTBF(p) = \frac{1}{\dfrac{J}{K\omega i}\, p^2 + \dfrac{(f+K)}{K\omega i}\, p + 1}$$

   - J being the inertia,
   - f being the friction coefficient,
   - K being the value of the gain, and
   - wi being the specific pulsing of a pole.

6. Rotating electric machine according to any one of Claims 1 to 5, **characterized in that** it can be powered at a voltage of 48 volts.

**Fig.1**

**Fig.2**

**Fig.3**

**Fig.4**

**Fig.5**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20020002094 A1
- CN 106274443